# EUROPEAN PATENT SPECIFICATION

(11) **EP 4 182 568 B1**
(45) Date of publication and mention of the grant of the patent: **14.10.2026**
(21) Application number: 21746331.4
(22) Date of filing: 16.07.2021
(51) Int. Cl.: F16B 2/06, F16B 2/12, F16B 9/00, F16L 3/24, B25B 5/10, B25B 5/14

(54) **ATTACHMENT DEVICE FOR CLAMPING TO A STRUCTURAL COMPONENT**
BEFESTIGUNGSVORRICHTUNG ZUM FESTKLEMMEN AN EINEM STRUKTURBAUTEIL
DISPOSITIF DE FIXATION PERMETTANT UN SERRAGE SUR UN COMPOSANT STRUCTURAL

(30) Priority: 17.07.2020 US 202063053156 P; 15.07.2021 US 202117376979
(43) Date of publication of application: 24.05.2023
(73) Proprietor: Eaton Intelligent Power Limited, Dublin 4 (IE)
(72) Inventor: THORAT, Hemraj Keda, Pune, Maharashtra 411036 (IN); KESKAR, Harshad, Pune, Maharashtra 411033 (IN); KHALKAR, Amol Anil, Nashik, Maharashtra 422207 (IN); SABEL, Jason, Northborough, MA 01532 (US)
(74) Representative: Schwan Schorer & Partner mbB
(86) International application number: PCT/EP2021/025265
(87) International publication number: WO 2022/012780

(56) References cited:
- WO-A1-2016/032079
- KR-A- 20130 032 989
- KR-A- 20190 015 856
- US-A1- 2017 336 021
- US-B1- 6 464 422
- US-B2- 10 415 616

## Description

### FIELD OF THE DISCLOSURE

The present disclosure generally relates to attachment devices for attaching to a structural component of a building.

### BACKGROUND OF THE DISCLOSURE

Seismic supporting systems are used to support non-structural components (e.g., pipes) in a building. Seismic supporting systems typically include seismic sway braces and restraints. Sway braces and restraints are used to secure non-structural components to a building and minimize the differential movement between the non-structural components and the structural components and/or building itself. Examples of non-structural components in a building include, but are not limited to, pipes, conduits, round ducts, fittings, cable trays, etc. An attachment device attaches to a structural element of the building (e.g., a joist/lumber) and the sway brace or restraint, thereby securing the non-structural component to the building.

US 5,598,785 relates to a hanger bracket for track rails, comprising two plate members with five planar portions, each of which is orthogonal with respect to its adjacent portions. The two plate members are welded together. The interior space of the track rail supports a trolley on support surfaces. US 1,623,892 relates to scaffold shoe with a hanger for attaching a beam to a brick wall, including flanges for attaching an arm to the brick wall and the scaffold shoe. A fastening element is inserted through the hanger and entirely through the beam to attach the scaffold shoe to the beam while fastening elements are used to attached the scaffold shoe to the arm and thereby secure the scaffold shoe between the bricks. The hanger is shaped from a single piece of strap iron by being bent into a relatively U shape. Free ends of the hanger are bent inwardly to upwardly provide spaced apart parallel flanges. The hanger receives a beam C and is inserted between horizontally disposed bricks until a tooth or shoulder engages behind a brick of the next lower row of bricks. Another attachment device of the prior art is disclosed in US 10 415 616 B2.

### SUMMARY OF THE DISCLOSURE

The invention relates to an attachment device for attaching to a structural component of a building to couple a fitting to the structural component as defined in claim 1.

### BRIEF DESCRIPTION OF THE DRAWINGS

FIG. 1 is a perspective of one example of a sway brace/restraint that can be used with attachment devices of the present invention;
FIG. 2 is a perspective of a first embodiment of an attachment device attached to a structural component according to the present invention;
FIG. 3 is a side view of the attachment device and structural component of FIG. 2 and further showing a second attachment device;
FIG. 4 is a perspective of an example of an attachment device attached to a structural component, which is not according to the present invention;
FIG.5 is a perspective of the attachment device of FIG. 4 and a second attachment device coupled to the attachment device;
FIG. 6 is a perspective of an example of an attachment device attached to a structural component, which is not according to the present invention; and
FIG. 7 is a perspective of an example of an attachment device attached to a structural component, which is not according to the present invention.

Corresponding reference characters indicate corresponding parts throughout the drawings.

### DETAILED DESCRIPTION OF THE DISCLOSURE

Overall, the attachment devices of the various embodiments described herein are for attaching to a structural component. The attachment devices can be secured to any structural element of a building such as a beam, floor, ceiling, for example. In the illustrated embodiment, the attachment devices are secured to I-joists. The term structural component includes, but is not limited to, a sway brace, a restraint, and building structural elements, such as beams, floors, joists, columns, ceilings etc. The various attachment devices are each configured to securely attach to the structural component (i.e., I-joist) and make a minimal number of holes in the structural component to form the secure attachment. Thus, the attachment devices are configured to maintain the strength and structural integrity of the structural component after attachment to the structural component. Therefore, the various attachment devices of the present disclosure allow builders (e.g., construction workers, contractors, etc.) to brace or restrain non-structural components to the structural component without damaging the structural component.

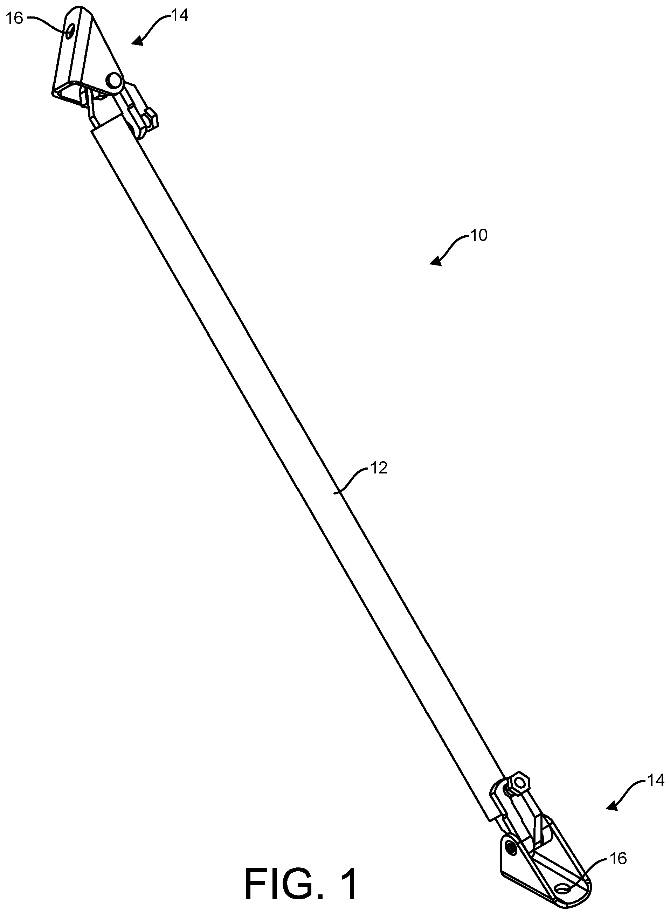

Referring to FIG. 1, one example of a suitable sway brace or restraint that can be used with the various attachment devices described below is generally indicated at reference numeral 10. As generally known in the art, the sway brace/restraint 10 includes a strut 12 (e.g., pipe, bar, rod, etc.) and opposite connection fittings 14 at each end of the strut. One connection fitting 14 may be used to attach the sway brace/restraint 10 to a structural component (e.g., I-joist of a building) and the opposite connection fitting 14 can be used to attach the sway brace/restraint to a non-structural component (e.g., pipes, conduits, round ducts, fittings, cable trays, etc.). When the attachment device is coupled to the non-structural component, the sway brace/restraint spans between the structural component and the non-structural component, thereby supporting the non-structural component in the building. In the illustrated embodiment, each of the connection fittings 14 are identical and define a fastener opening 16 that can be used to connect the connection fitting to any one of the various attachment devices, as described in more detail below. It is understood that the sway brace/restraint 10 in FIG. 1 is illustrative and that the various attachment devices of the present disclosure may be used with any suitable sway brace/restraint. For example, the sway brace/restraint may be a seismic sway brace/restraint. Furthermore, it is contemplated that any one of the various attachment devices described below may be directly connected to the strut 12 of the sway brace/restraint 10 (e.g., replace one of the connection fittings 14 at one end of the strut 12), as is generally known in the art.

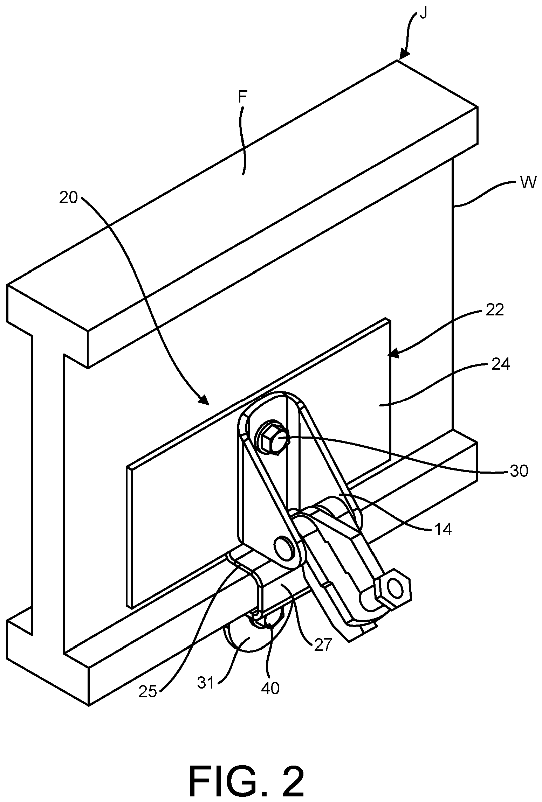

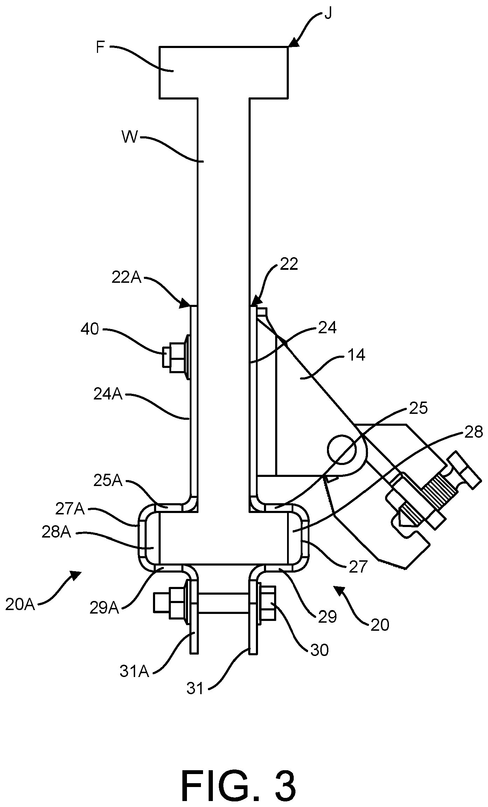

Referring to FIGS. 2-3, a first embodiment of an attachment device for coupling to a structural component, is generally indicated at reference numeral 20. As shown in FIG. 2, attachment device 20 is configured to be attached to a structural component, such as a wooden I-joist J, and to a connection fitting 14 for attachment to a suitable sway brace restraint, or the like. The attachment device 20 includes a body or plate member 22 configured to be attached to the joist J.

The plate member 22 has a first planar portion 24, a second planar portion 25 extending from the first planar portion, a third planar portion 27 extending from the second planar portion, a fourth planar portion 29 extending from the third planar portion, and a fifth planar portion 31 extending from the fourth planar portion. The first planar portion 24 provides a contact surface for engaging the web W of the joist J. In the illustrated embodiment, the first planar portion has a rectangular shape. However, the first planar portion 24 could be formed in any suitable shape such as round or oblong without departing from the scope of the disclosure. The second portion 25 extends orthogonally from the first planar portion 24 and provides a contact surface for engaging a top of the bottom flange F of the joist J. The third planar portion 27 extends orthogonally from the second planar portion 25 and extends generally parallel to and opposite a side edge of the bottom flange F of the joist J. A clearance gap 28 is formed between an inner surface of the third planar portion 27 and the side edge of the bottom flange F of the joist J. The fourth planar portion 29 extends orthogonally from the third planar portion 27 and provides a contact surface for engaging a bottom of the bottom flange F of the joist J. The fifth planar portion 31 extends orthogonally from the fourth planar portion 29. A fastener hole (not shown) in the fifth planar portion 31 is configured to receive a fastener 30 for securing the attachment device 20 to the joist J. In one embodiment, the fastener 30 is a standard bolt fastener. A hole (not shown) in the first planar portion 24 is configured to receive a fastener 40 for attaching the fitting 14 to the attachment device 20. In one embodiment, the fastener 40 is a standard bolt fastener.

The attachment device 20 may be considered a first attachment device, and is configured for attachment to a first face of the web W of the joist J. A second attachment device 20A is configured for attachment to an opposite face of the web W of the joist J. The second attachment device 20A comprises a plate member 22A including a first planar portion 24A, a second planar portion 25A extending from the first planar potion 24A, a third planar portion 27A extending from the second planar portion, a fourth planar portion 29A extending from the third planar portion, and a fifth planar portion 31A extending from the fourth planar portion. The first planar portion 24A provides a contact surface for engaging the web W of the joist J. The second planar portion 25A extends orthogonally from the first planar portion 24A and provides a contact surface for engaging the top of the bottom flange F of the joist J. The third planar portion 27A extends orthogonally from the second planar portion 25A and extends generally parallel to and opposite an opposite side edge of the bottom flange F of the joist J. A clearance gap 28A is formed between an inner surface of the third planar portion 27A and the opposite side edge of the bottom flange F of the joist J. The fourth planar portion 29A extends orthogonally from the third planar portion 27A and provides a contact surface for engaging the bottom of the bottom flange F of the joist J. The fifth planar portion 31A extends orthogonally from the fourth planar portion 29A. A fastener hole (not shown) in the fifth planar portion 31A is configured to receive the fastener 30 for securing the two attachment devices 20, 20A to the joist J. In the illustrated embodiment, the attachment devices 20, 20A are secured around the bottom flange F. However, the attachment devices 20, 20A could be secured around the top flange F.

The fastener 30 does not extend through the joist J. Rather, only fastener 40 extends through the joist J. Therefore, securing the attachment devices 20, 20A to the joist J involves making only a single hole through the web W of the joist. Accordingly, the strength and structural integrity of the joist J is maintained after attachment of the attachment devices 20, 20A. The use of the two attachment devices 20, 20A also allows the size of each attachment device to be reduced while still providing a sufficient attachment structure. Additionally, the clearance gaps 28, 28A between the third planar surfaces 27, 27A and the flange F of the joist J allow for the attachment devices 20, 20A to be used with varying size joists. In particular, the clearance gaps 28, 28A allow the attachment devices 20, 20A to be used with joists having thicker webs and/or thicker/wider flanges

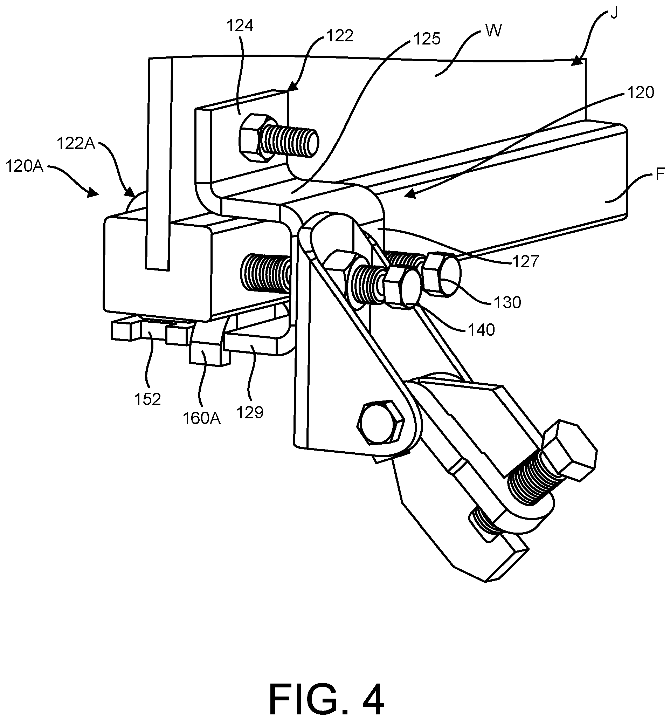

Referring to FIG. 4, an example of an attachment device for attaching to a structural component, which is not according to the invention, is generally indicated at reference numeral 120. The attachment device 120 is configured to be attached to a structural component, such as a wooden I-joist J, and to a connection fitting 14 for attachment to a suitable sway brace restraint, or the like. The attachment device 120 includes a body or plate member 122 configured to be attached to the joist J.

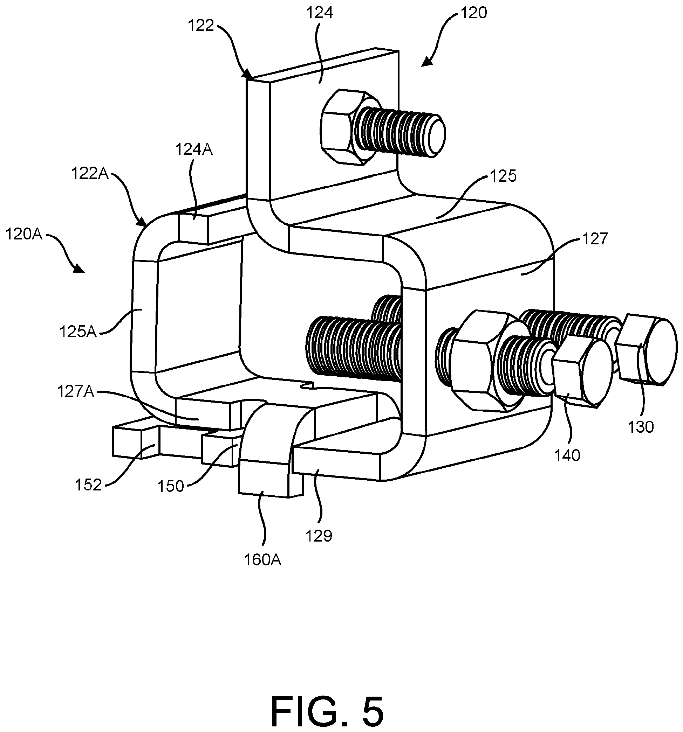

The plate member 122 has a first planar portion 124, a second planar portion 125 extending from the first planar portion, a third planar portion 127 extending from the second planar potion, and a fourth planar portion 129 extending from the third planar portion. The first planar portions 124 provides a contact surface for engaging the web W of the joist J. In the illustrated embodiment, the first planar portion has a rectangular shape. However, the first planar portion 24 could be formed in any suitable shape such as round or oblong. The second portion 125 extends orthogonally from the first planar portion 24 and provides a contact surface for engaging a top of bottom flange F of the joist J. The third planar portion 127 extends orthogonally from the second planar portion 125 and extends generally parallel to and opposite a side edge of the bottom flange F of the joist J. The fourth planar portion 129 extends orthogonally from the third planar portion 127 and extends generally parallel to and opposite a bottom of the bottom flange F of the joist J. The fourth planar portion 129 has a length extending from an end of the fourth planar portion connected to the third planar portion 127 to a free end of the fourth planar portion. A first pair of notches 150 (FIG. 5) are formed in side edges of the fourth planar portion 129 at a first distance from the end of the fourth planar portion connected to the third planar portion 127. A second pair of notches 152 are formed in the side edges of the fourth planar portion 129 at a second distance from the end of the fourth planar portion connected to the third planar portion 127 that is greater than the first distance.

A fastener hole (not shown) in the third planar portion 127 is configured to receive a fastener 130 for securing the attachment device 120 to the joist J. In one embodiment, the fastener 130 is a standard bolt fastener. A second hole (not shown) in the third planar portion 127 is configured to receive a fastener 140 for securing the attachment device 120 to the joist J, and for attaching the fitting 14 to the attachment device. In one embodiment, the fastener 140 is a standard bolt fastener. As will be explained in greater detail below, the fasteners 130, 140 do not make holes extending entirely through the joist J when securing the attachment device to the joist.

The attachment device 120 may be considered a first attachment device, and is configured for engagement with a first face of the web W of the joist J. A second attachment device 120A is configured for engagement with an opposite face of the web W of the joist J. The second attachment device 120A comprises a plate member 122A including a first planar portion 124A, a second planar portion 125A extending from the first planar potion, a third planar portion 127A extending from the second planar portion, and a pair of arms 160A (only one is shown) extending from side edges of the third planar portion. The arms 160A are bent out of plane from the third planar portion 127A. The first planar portion 124A provides a contact surface for engaging the web W of the joist J at an end surface of the first planar portion. The first planar portion 124A also provides a contact surface for engaging the top of the bottom flange F of the joist J along an inner surface of the first planar portion. The second planar portion 125A extends orthogonally from the first planar portion 124A and extends generally parallel to and opposite the opposite side edge of the bottom flange F of the joist J. The third planar portion 127A extends orthogonally from the second planar portion 125A and extends generally parallel to and opposite the bottom of the bottom flange F of the joist J. The arms 160A extending from the third planar portion 127A may be received in one of the pairs of notches 150, 152 in the fourth planar portion 129 of the first attachment device 120 to couple the second attachment device 120A to the first attachment device. To this effect, the relative position of the surfaces of the attachment devices 120, 120A can be adjusted. In particular, the spacing between an inner surface of the first planar surface 124 of the first attachment device 120 and the end surface of the first planar surface 124A of the second attachment device 120A is adjusted depending on the notches 150, 152 in which the arms 160A are received. Further the spacing between an inner surface of the third planar surface 127 of the first attachment device 120 and the inner surface of the second planar surface 125A of the second attachment device 120A is adjusted depending on the notches 150, 152 in which the arms 160A are received. The spacing between the surfaces is increased when the arms 160A are received in notches 152.

When the fasteners 130, 140 are received in their respective fastener holes and engaged with the flange F of the joist J, the tightening of the fasteners pulls the second attachment device 120A toward the first attachment device 120 thereby clamping the attachment devices to the joist. The fasteners 130, 140 engage the side edge of the flange F but they do not extend entirely through the flange. Therefore, securing the attachment devices 120, 120A to the joist J does not involve making any through holes in the joist. Accordingly, the strength and structural integrity of the joist J is maintained after attachment of the attachment devices 120, 120A. The use of the two attachment devices 120, 120A also allows the size of each attachment device to be reduced while still providing a sufficient attachment structure. Additionally, the ability to adjust the position of the second attachment device 120A relative to the first attachment device 120 allows for the attachment devices to be used with varying size joists. In particular, the spacing between the opposing surfaces of the attachment devices 120, 120A allows the attachment devices to be used with joists having different web and/or flange thicknesses.

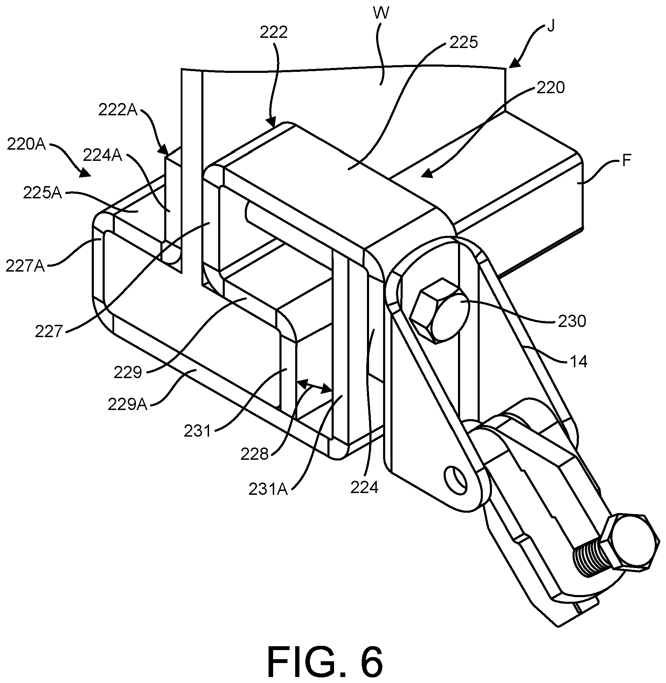

Referring to FIG. 6, an example of an attachment device for attaching to a structural component, which is not according to the invention, is generally indicated at reference numeral 220. The attachment device 220 is configured to be attached to a structural component, such as a wooden I-joist J, and to a connection fitting 14 for attachment to a suitable sway brace restraint, or the like. The attachment device 220 includes a body or plate member 222 configured to be attached to the joist J.

The plate member 222 has a first planar portion 224, a second planar portion 225 extending from the first planar portion, a third planar portion 227 extending from the second planar potion, a fourth planar portion 229 extending from the third planar portion, and a fifth planar portion 231 extending from the fourth planar portion. The first planar portions 124 provides an engagement surface for the fitting 14. The first planar surface 224 extends generally vertically when the attachment device 220 is attached to the joist J. The second planar portion 225 extends orthogonally from the first planar portion 224 and generally horizontally when the attachment device 20 is attached to the joist J. The third planar portion 227 extends orthogonally from the second planar portion 225 and provides a contact surface for engaging the web W of the joist J. The fourth planar portion 229 extends orthogonally from the third planar portion 227 and provides a contact surface for engaging a top of the bottom flange F of the joist J. The fifth planar portion 231 extend orthogonally from the fourth planar portion 229 and provides a contact surface for engaging a side edge of the bottom flange F of the joist J.

A fastener hole (not shown) in the first planar portion 224 is configured to receive a fastener 230 for securing the attachment device 220 to the joist J, and for attaching the fitting 14 to the attachment device. In one embodiment, the fastener 230 is a standard bolt fastener. As will be explained in greater detail below, the fastener 230 does not engage or make a hole in the joist J when securing the attachment device to the joist.

The attachment device 220 may be considered a first attachment device, and is configured for engagement with a first face of the web W of the joist J. A second attachment device 220A is configured for engagement with an opposite face of the web W of the joist J. The second attachment device 220A comprises a plate member 222A including a first planar portion 224A, a second planar portion 225A extending from the first planar potion, a third planar portion 227A extending from the second planar portion, a fourth planar portion 229A extending from the third planar portion, and fifth planar portion 231A extending from the fourth planar portion. The first planar portion 224A provides a contact surface for engaging the web W of the joist J at an inner surface of the first planar portion. The second planar portion 225A extends orthogonally from the first planar portion 224A and provides a contact surface for engaging the top of the bottom flange F of the joist J along an inner surface of the second planar portion. The third planar portion 227A extends orthogonally from the second planar portion 225A and provides a contact surface for engaging a side edge of the flange F of the joist J. The fourth planar portion 229A extends orthogonally from the third planar portion 227A and provides a contact surface for engaging a bottom of the bottom flange F of the joist J. The fifth planar portion 231A extends orthogonally from the fourth planar portion 229A and extends generally parallel to and opposite an opposite side of the flange F of the joist J. A fastener hole (not shown) in the fifth planar portion 231A is configured to receive the fastener 230. A clearance gap 228 is provided between an outer surface of the fifth planar portion 231 of the first attachment device 220 and an inner surface of the fifth planar surface 231A of the second attachment device 220A. As will be explained in greater detail below, the clearance gap 228 configures the attachment devices 220, 220A to be attached to joists J of different sizes.

When the fastener 230 is received in the fastener holes, the fastener engages with an outer surface of the third planar portion 227 of the first attachment device 220. The tightening of the fastener 230 pushes the first attachment device 220 toward the second attachment device 220A and pulls the second attachment device toward the first attachment device thereby clamping the attachment devices to the joist J. Therefore, securing the attachment devices 220, 220A to the joist J does not involve making any holes through the joist J. In fact, securing the attachment devices 220, 220A does not involve contacting the fastener 230 with the joist J. Rather, the frictional clamping force created by the fastener 230 and the attachment devices 220, 220A holds the attachment devices to the joist J. Accordingly, the strength and structural integrity of the joist J is maintained after attachment of the attachment devices 220, 220A. This also increase the efficiency of installation by eliminating the time needed to drill holes into the joist J. The use of the two attachment devices 220, 220A also allows the size of each attachment device to be reduced while still providing a sufficient attachment structure. Additionally, the clearance gap 228 between the attachment devices 220, 220A allows for the attachment devices to be used with varying size joists. In particular, the spacing between the opposing surfaces of the attachment devices 220, 220A allows the attachment devices to be used with joists having different web and/or flange thicknesses and/or flange widths.

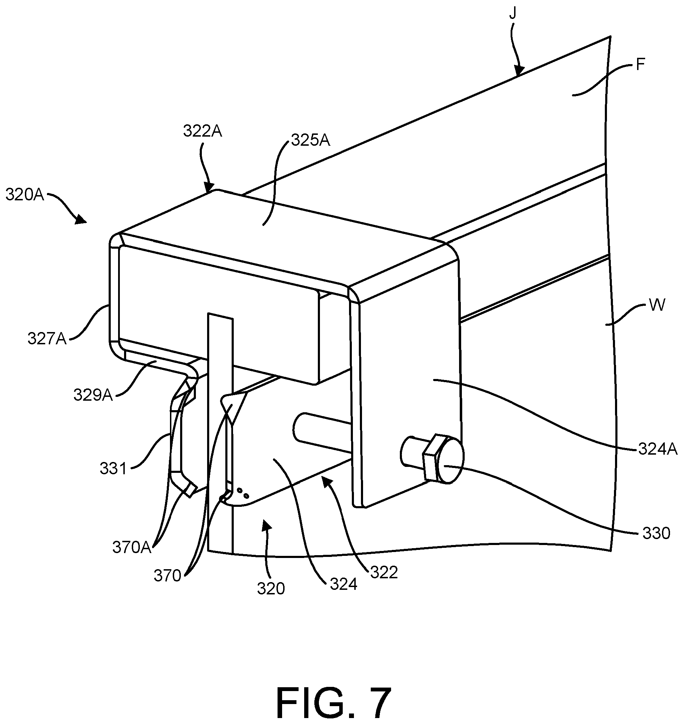

Referring to FIG. 7, an example of an attachment device for attaching to a structural component, which is not according to the invention, is generally indicated at reference numeral 320. The attachment device 320 is configured to be attached to a structural component, such as a wooden I-joist. The attachment device 320 includes a body or plate member 322 configured to be attached to the joist J.

The plate member 322 has a planar portion 324. The planar portions 324 provides a contact surface for engaging the web W of the joist J. In the illustrated embodiment, the first planar portion has a rectangular shape. However, the first planar portion 324 could be formed in any suitable shape such as round or oblong. Corners 370 of the plate member 322 are bent out of plane with the planar portion 324. When the plate member 322 is engaged with the web W of the joist, the corners 370 bite into the web to hold the plate member to the joist J as will be explained in greater detail below.

The attachment device 320 may be considered a first attachment device, and is configured for engagement with a first face of the web W of the joist J. A second attachment device 320A is configured for engagement with an opposite face of the web W of the joist J. The second attachment device 320A comprises a plate member 322A including a first planar portion 324A, a second planar portion 325A extending from the first planar potion, a third planar portion 327A extending from the second planar portion, a fourth planar portion 329A extending from the third planar portion, and fifth planar portion 331A extending from the fourth planar portion. The first planar portion 324A extends generally parallel to and opposite a side edge of a flange F of the joist J. The second planar portion 325A extends orthogonally from the first planar portion 324A and provides a contact surface for engaging a top of the flange F of the joist J along an inner surface of the second planar portion. The third planar portion 327A extends orthogonally from the second planar portion 325A and provides a contact surface for engaging an opposite side edge of the flange F of the joist J. The fourth planar portion 329A extends orthogonally from the third planar portion 327A and provides a contact surface for engaging a bottom of the flange F of the joist J. The fifth planar portion 331A extends orthogonally from the fourth planar portion 329A and provides a contact surface for engaging the web W of the joist J. Corners 370A of the fifth planar portion 331A are bent out of plane. When the fifth planar portion 331A is engaged with the web W of the joist J, the corners 370A bite into the web to hold the plate member 332A to the joist J.

A fastener hole (not shown) in the first planar portion 324A of the second attachment device 320A is configured to receive a fastener 330 for securing the attachment devices 320, 320A to the joist J, and for attaching a fitting (not shown) to the attachment device. In one embodiment, the fastener 330 is a standard bolt fastener. As will be explained in greater detail below, the fastener 330 does not make a hole in the joist J when securing the attachment devices to the joist J.

When the fastener 330 is received in the fastener hole in the second attachment device 320A, the fastener engages with an outer surface of the planar portion 224 of the first attachment device 320. The tightening of the fastener 330 pushes the first attachment device 320 toward the second attachment device 320A and pulls the second attachment device 320A toward the first attachment device thereby clamping the attachment devices to the joist J. The corners 370, 370A of the attachment devices 320, 320A will bite into the edges of the web W of the joist J further securing the attachment devices to the joist. Therefore, securing the attachment devices 320, 320A to the joist J does not involve making any holes through the joist J. In fact, securing the attachment devices 320, 320A does not involve contacting the fastener 330 with the joist J. Rather, the frictional clamping force and biting action created by the fastener 330 and the attachment devices 320, 320A holds the attachment devices to the joist J. Accordingly, the strength and structural integrity of the joist J is maintained after attachment of the attachment devices 320, 320A. This also increases the efficiency of installation by eliminating the time needed to drill holes into the joist J. The use of the two attachment devices 320, 320A also allows the size of each attachment device to be reduced while still providing a sufficient attachment structure.

It is apparent that the elements, features, and/or teachings set forth in each embodiment disclosed herein are not limited to the specific embodiments the elements, features and/or teachings are described in. Accordingly, it is understood that the elements features and/or teachings described in one embodiment may be applied to one or more of the other embodiments disclosed herein.

Modifications and variations of the disclosed embodiments are possible without departing from the scope of the invention defined in the appended claims.

When introducing elements of the present invention or the embodiment(s) thereof, the articles "a", "an", "the" and "said" are intended to mean that there are one or more of the elements. The terms "comprising", "including" and "having" are intended to be inclusive and mean that there may be additional elements other than the listed elements.

As various changes could be made in the above constructions, products, and methods without departing from the scope of the invention, it is intended that all matter contained in the above description and shown in the accompanying drawings shall be interpreted as illustrative and not in a limiting sense.

## Claims

1. An attachment device for attaching to a structural component (J) of a building to couple a fitting (14) to the structural component (J), the attachment device comprising
at least one plate member (22) configured to be attached directly to the structural component (J) and engaged by the fitting (14) to mount the fitting (14) to the attachment device (20) for coupling the fitting (14) to the structural component (J), the at least one plate member (22) being configured for attachment to the structural component (J) by making no more than one hole in the structural component (J), wherein the at least one plate member (22) includes
a first planar portion (24) configured to engage a web (W) (W) portion of the structural component (J), wherein the first planar portion (24) defines a first opening configured to receive a first fastener (30, 40) for attaching the attachment device (20) to the structural component (J),
a second planar portion (25) extending orthogonally from the first planar portion (24) and configured to provide a contact surface for engaging a top of a flange (F) of the structural component (J),
a third planar portion (27) extending orthogonally from the second planar portion (25) and generally parallel to a side edge of the flange (F) of the structural component (J),
a fourth planar portion (29) extending orthogonally from the third planar portion (27) and configured to provide a contact surface for engaging a bottom of the flange (F) of the structural component (J), and
a fifth planar (31) portion extending orthogonally from the fourth planar portion (29) and defining a second opening being configured to receive a second fastener (30, 40) for securing the attachment device (20) to the structural component (J),
wherein the at least one plate member (22) comprises a first plate member (22) for engaging a first surface of the structural component (J), and a second plate member (22A) for engaging a second surface of the structural component (J) opposite the first surface, and
wherein the second openings of the first and second plate members (22, 22A) are configured to receive the second fastener to secure the first and second plate members (22, 22A) to one another.

2. The attachment device of claim 1, further comprising the first fastener for attaching the attachment device (20) to the structural component (J), wherein the first fastener is configured to extend through the opening in the first planar portion (24) and through an aligned opening in the web (W) portion of the structural component (J) (J).

3. The attachment device of claim 2, further comprising the second fastener for attaching the first and second plate members (22, 22A) to the structural component (J), wherein the second fastener attaches the first and second plate members (22, 22A) to the structural component (J) through one of a frictional, biting, and clamping engagement.

4. The attachment device of claim 3, wherein the second fastener is configured to not extend through the structural component (J) and does not contact the structural component (J).

5. The attachment device of claim 4, wherein the second fastener extends through the second openings of the first and second plate members (22, 22A) to secure the first and second plate members (22, 22A) to one another.

6. The attachment device of claim 1, wherein the second plate member (22A) is configured to engage the first plate member (22) at a plurality of locations to adjust a distance between opposing surfaces of the attachment devices (20, 20A) to accommodate structural components (J) of different sizes.

7. The attachment device of claim 1, in combination with the structural component, wherein the structural component (J) comprises a wooden I-joist.

8. The attachment device of claim 1, wherein the structural component (J) is a joist including the web (W) and the flange (F), the first and second plate members (22, 22A) being support by the web (W) and flange (F) when the attachment device (20) is attached to the joist such that load distribution on the attachment device (20) is spread out through both the web (W) and flange (F).

9. The attachment device of claim 8, in combination with the joist (J), wherein the first and second plate members (22, 22A) are attached to the joist (J) by making no more than one hole in the structural component (J).

## Patentansprüche

1. Befestigungsvorrichtung zum Befestigen an einem Strukturbauteil (J) eines Gebäudes, um einen Beschlag (14) mit dem Strukturbauteil (J) zu koppeln, wobei die Befestigungsvorrichtung Folgendes umfasst:
mindestens ein Plattenelement (22), das dazu ausgebildet ist, direkt an dem Strukturbauteil (J) befestigt zu werden und von dem Beschlag (14) in Eingriff genommen zu werden, um den Beschlag (14) an der Befestigungsvorrichtung (20) zu montieren, um den Beschlag (14) mit dem Strukturbauteil (J) zu koppeln, wobei das mindestens eine Plattenelement (22) dazu ausgebildet ist, unter Herstellung von nicht mehr als einer Bohrung in dem Strukturbauteil (J) an diesem befestigt zu werden, wobei das mindestens eine Plattenelement (22) Folgendes umfasst:
einen ersten ebenen Abschnitt (24), der dazu ausgebildet ist, mit einem Stegabschnitt (W) des Strukturbauteils (J) in Eingriff zu treten, wobei der erste ebene Abschnitt (24) eine erste Öffnung definiert, die dazu ausgebildet ist, ein erstes Befestigungselement (30, 40) zum Befestigen der Befestigungsvorrichtung (20) an dem Strukturbauteil (J) aufzunehmen,
einen zweiten ebenen Abschnitt (25), der sich orthogonal von dem ersten ebenen Abschnitt (24) erstreckt und dazu ausgebildet ist, eine Kontaktfläche zum Eingriff mit einer Oberseite eines Flansches (F) des Strukturbauteils (J) bereitzustellen,
einen dritten ebenen Abschnitt (27), der sich orthogonal von dem zweiten ebenen Abschnitt (25) erstreckt und im Allgemeinen parallel zu einer Seitenkante des Flansches (F) des Strukturbauteils (J) verläuft,
einen vierten ebenen Abschnitt (29), der sich orthogonal von dem dritten ebenen Abschnitt (27) erstreckt und dazu ausgebildet ist, eine Kontaktfläche zum Eingriff mit einer Unterseite des Flansches (F) des Strukturbauteils (J) bereitzustellen, und
einen fünften ebenen Abschnitt (31), der sich orthogonal von dem vierten ebenen Abschnitt (29) erstreckt und eine zweite Öffnung definiert, die dazu ausgebildet ist, ein zweites Befestigungselement (30, 40) zum Sichern der Befestigungsvorrichtung (20) an dem Strukturbauteil (J) aufzunehmen,
wobei das mindestens eine Plattenelement (22) ein erstes Plattenelement (22) zum Eingriff mit einer ersten Oberfläche des Strukturbauteils (J) und ein zweites Plattenelement (22A) zum Eingriff mit einer der ersten Oberfläche gegenüberliegenden zweiten Oberfläche des Strukturbauteils (J) umfasst, und
wobei die zweiten Öffnungen des ersten und des zweiten Plattenelements (22, 22A) dazu ausgebildet sind, das zweite Befestigungselement aufzunehmen, um das erste und das zweite Plattenelement (22, 22A) aneinander zu sichern.

2. Befestigungsvorrichtung nach Anspruch 1, ferner umfassend das erste Befestigungselement zum Befestigen der Befestigungsvorrichtung (20) an dem Strukturbauteil (J), wobei das erste Befestigungselement dazu ausgebildet ist, sich durch die Öffnung in dem ersten ebenen Abschnitt (24) und durch eine damit fluchtende Öffnung in dem Stegabschnitt (W) des Strukturbauteils (J) zu erstrecken.

3. Befestigungsvorrichtung nach Anspruch 2, ferner umfassend das zweite Befestigungselement zum Befestigen des ersten und des zweiten Plattenelements (22, 22A) an dem Strukturbauteil (J), wobei das zweite Befestigungselement das erste und das zweite Plattenelement (22, 22A) durch einen reibschlüssigen, beißenden oder klemmenden Eingriff an dem Strukturbauteil (J) befestigt.

4. Befestigungsvorrichtung nach Anspruch 3, wobei das zweite Befestigungselement dazu ausgebildet ist, sich nicht durch das Strukturbauteil (J) zu erstrecken, und das Strukturbauteil (J) nicht berührt.

5. Befestigungsvorrichtung nach Anspruch 4, wobei sich das zweite Befestigungselement durch die zweiten Öffnungen des ersten und des zweiten Plattenelements (22, 22A) erstreckt, um das erste und das zweite Plattenelement (22, 22A) aneinander zu sichern.

6. Befestigungsvorrichtung nach Anspruch 1, wobei das zweite Plattenelement (22A) dazu ausgebildet ist, mit dem ersten Plattenelement (22) an mehreren Stellen in Eingriff zu treten, um einen Abstand zwischen gegenüberliegenden Oberflächen der Befestigungsvorrichtungen (20, 20A) einzustellen, um Strukturbauteile (J) unterschiedlicher Größe aufzunehmen.

7. Befestigungsvorrichtung nach Anspruch 1 in Kombination mit dem Strukturbauteil, wobei das Strukturbauteil (J) einen hölzernen I-Träger umfasst.

8. Befestigungsvorrichtung nach Anspruch 1, wobei das Strukturbauteil (J) ein Träger ist, der den Stegabschnitt (W) und den Flansch (F) umfasst, wobei das erste und das zweite Plattenelement (22, 22A) von dem Stegabschnitt (W) und dem Flansch (F) getragen werden, wenn die Befestigungsvorrichtung (20) an dem Träger befestigt ist, derart, dass eine Lastverteilung auf die Befestigungsvorrichtung (20) sowohl über den Stegabschnitt (W) als auch über den Flansch (F) erfolgt.

9. Befestigungsvorrichtung nach Anspruch 8 in Kombination mit dem Träger (J), wobei das erste und das zweite Plattenelement (22, 22A) unter Herstellung von nicht mehr als einer Bohrung in dem Strukturbauteil (J) an dem Träger (J) befestigt sind.

## Revendications

1. Dispositif de fixation destiné à être fixé à un composant structural (J) d'un bâtiment pour accoupler une pièce de fixation (14) au composant structural (J), le dispositif de fixation comprenant
au moins un élément plaque (22) conçu pour être fixé directement au composant structural (J) et mis en prise par la pièce de fixation (14) pour monter la pièce de fixation (14) sur le dispositif de fixation (20) pour accoupler la pièce de fixation (14) au composant structural (J), l'au moins un élément plaque (22) étant conçu pour être fixé au composant structural (J) en ne faisant pas plus d'un trou dans le composant structural (J), l'au moins un élément plaque (22) comprenant
une première partie plane (24) conçue pour venir en prise avec une partie âme (W) du composant structural (J), la première partie plane (24) définissant une première ouverture conçue pour recevoir un premier élément de fixation (30, 40) destiné à fixer le dispositif de fixation (20) au composant structural (J),
une deuxième partie plane (25) s'étendant orthogonalement à partir de la première partie plane (24) et conçue pour fournir une surface de contact destinée à venir en prise avec une partie supérieure d'une bride (F) du composant structural (J),
une troisième partie plane (27) s'étendant orthogonalement à partir de la deuxième partie plane (25) et d'une manière générale parallèle à un bord latéral de la bride (F) du composant structural (J),
une quatrième partie plane (29) s'étendant orthogonalement à partir de la troisième partie plane (27) et conçue pour fournir une surface de contact destinée à venir en prise avec une partie inférieure de la bride (F) du composant structural (J), et
une cinquième partie plane (31) s'étendant orthogonalement à partir de la quatrième partie plane (29) et définissant une seconde ouverture conçue pour recevoir un second élément de fixation (30, 40) destiné à fixer le dispositif de fixation (20) au composant structural (J),
l'au moins un élément plaque (22) comprenant un premier élément plaque (22) destiné à venir en prise avec une première surface du composant structural (J), et un second élément plaque (22A) destiné à venir en prise avec une seconde surface du composant structural (J) opposée à la première surface, et
les secondes ouvertures des premier et second éléments de plaque (22, 22A) étant conçues pour recevoir le second élément de fixation pour fixer les premier et second éléments plaque (22, 22A) l'un à l'autre.

2. Dispositif de fixation selon la revendication 1, comprenant en outre le premier élément de fixation destiné à fixer le dispositif de fixation (20) au composant structural (J), le premier élément de fixation étant conçu pour s'étendre à travers l'ouverture dans la première partie plane (24) et à travers une ouverture alignée dans la partie âme (W) du composant structural (J).

3. Dispositif de fixation selon la revendication 2, comprenant en outre le second élément de fixation destiné à fixer les premier et second éléments plaque (22, 22A) au composant structural (J), le second élément de fixation fixant les premier et second éléments plaque (22, 22A) au composant structural (J) par l'intermédiaire d'une mise en prise par frottement, morsure ou serrage.

4. Dispositif de fixation selon la revendication 3, le second élément de fixation étant conçu pour ne pas s'étendre à travers le composant structural (J) et ne venant pas en contact avec le composant structural (J).

5. Dispositif de fixation selon la revendication 4, le second élément de fixation s'étendant à travers les secondes ouvertures des premier et second éléments plaque (22, 22A) pour fixer les premier et second éléments plaque (22, 22A) l'un à l'autre.

6. Dispositif de fixation selon la revendication 1, le second élément plaque (22A) étant conçu pour venir en prise avec le premier élément plaque (22) en une pluralité d'emplacements pour ajuster une distance entre des surfaces opposées des dispositifs de fixation (20, 20A) pour recevoir des composants structuraux (J) de tailles différentes.

7. Dispositif de fixation selon la revendication 1, en association avec le composant structural, le composant structural (J) comprenant une solive en I en bois.

8. Dispositif de fixation selon la revendication 1, le composant structural (J) étant une poutrelle comprenant l'âme (W) et la bride (F), les premier et second éléments plaque (22, 22A) étant supportés par l'âme (W) et la bride (F) lorsque le dispositif de fixation (20) est fixé à la poutrelle de sorte que la répartition de charge sur le dispositif de fixation (20) s'étende à la fois sur l'âme (W) et la bride (F).

9. Dispositif de fixation selon la revendication 8, en combinaison avec la solive (J), les premier et second éléments plaque (22, 22A) étant fixés à la solive (J) en ne faisant pas plus d'un trou dans le composant structural (J).
